# EUROPEAN PATENT APPLICATION

(11) **EP 2 192 766 A2**
(43) Date of publication of application: **02.06.2010**
(21) Application number: 09008097.9
(22) Date of filing: 19.06.2009
(51) Int. Cl.: H04N 5/445, H04N 5/45

(54) **Broadcast receiving apparatus and method for reproducing recorded programs**

(30) Priority: 28.11.2008 JP 2008304691
(71) Applicant: Kabushiki Kaisha Toshiba, Minato-ku Tokyo (JP)
(72) Inventor: Hamada, Tomo, Tokyo (JP)
(74) Representative: HOFFMANN EITLE

(57) **Abstract**

A broadcast receiving apparatus includes: a plurality of receiver modules configured to selectively receive broadcast signals; a control module configured to perform signal processing on the broadcast signals received by the receiver modules and output processed signals; a recording module configured to record the processed signals as a plurality of program data; and a display processing module configured to process the program data stored by the recording module to generate displayable data to be displayed on a display device, wherein the control module includes a preview reproduction module configured to control the display processing module so that two or more of the program data are processed to be previewed simultaneously.

## Description

### CROSS REFERENCE TO RELATED APPLICATION(S)

The present disclosure relates to the subject matters contained in Japanese Patent Application No. 2008-304691 filed on November 28, 2008, which are incorporated herein by reference in its entirety.

### FIELD

The present invention relates to a broadcast receiving apparatus and a method for reproducing a broadcast program, which are capable of simultaneously receiving a plurality of broadcast signals.

### BACKGROUND

In recent years, the digitization of the TV broadcast has been set forward. In Japan, for example, not only the satellite digital broadcast, such as the BS (broadcasting satellite) digital broadcast and the 110-degrees CS (communications satellite) digital broadcast, but also the terrestrial digital broadcast has been started.

A video recorder is provided with a receiver that selectively receives a signal transmitted by broadcast or over a network, a signal processor that performs signal processing on the received signal, and a storage device such as a hard disk drive for recording a signal as subjected to the signal processing.

A recent digital TV receiver that receives TV broadcasts is capable of simultaneously receiving a plurality of broadcast signals and recording all programs that are broadcast in a given time period, since the capacity of storage device has been enlarged.

When all programs, which are broadcast in a given time period, are recorded, the user is required to find a program to be viewed from many recorded programs. Conventionally, an apparatus has been proposed which displays a selection list of a plurality of recorded programs, reproduces a content where the cursor is placed in the selection list, and displays the content with the selection list. An example of such apparatus is disclosed in JP-A-2007-274561.

Another apparatus has been proposed which displays programs while allocating broadcasting stations to horizontal positions and allocating time slots to vertical positions, to thereby allow a user to visually recognize a desired program among recorded broadcast programs. An example of such apparatus is disclosed in JP-A-2005-323056 (counterpart EP publication is: EP 1594137 A1).

When the user checks recorded programs, if they are displayed in preview mode and reproduced one by one to allow the user to check each program as proposed in the publication JP-A-2007-274561, it may take the user much time and labor. On the other hand, where a preview window is provided in a program table to allow the user to visually recognize a program partially as proposed in the publication JP-A-2005-323056, it may be difficult for the user to select a program to be viewed.

### SUMMARY

One of objects of the present invention is to provide a broadcast receiving apparatus and a method for reproducing program which allows to simultaneously preview a plurality of recorded programs to improve the usability.

According to an aspect of the present invention, there is provided a broadcast receiving apparatus including: a plurality of receiver modules configured to selectively receive broadcast signals; a control module configured to perform signal processing on the broadcast signals received by the receiver modules and output processed signals; a recording module configured to record the processed signals as a plurality of program data; and a display processing module configured to process the program data stored by the recording module to generate displayable data to be displayed on a display device, wherein the control module includes a preview reproduction module configured to control the display processing module so that two or more of the program data are processed to be previewed simultaneously.

According to another aspect of the present invention; there is provided a method for reproducing a program, the method including: receiving a plurality of broadcast signals selectively; performing signal processing on the broadcast signals to output processed signals; recording the processed signals as a plurality of program data; and processing the stored program data to generate displayable data to be displayed on a display device, wherein the stored program data are processed so that two or more of the program data are processed to be previewed simultaneously.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 illustrates an example configuration of a broadcast receiving apparatus according to an embodiment of the invention.
Fig. 2 illustrates an example entire recorded program list display screen in the broadcast receiving apparatus according to the embodiment of the invention.
Fig. 3 illustrates an example entire recorded program list display screen including an electronic program guide in the broadcast receiving apparatus according to the embodiment of the invention.
Fig. 4 illustrates another example entire recorded program list display screen including an electronic program guide in the broadcast receiving apparatus according to the embodiment of the invention.
Fig. 5 illustrates an example manner of a display of a recorded program title list and a preview screen in the broadcast receiving apparatus according to the embodiment of the invention.
Fig. 6 illustrates an example preview program selection screen in the broadcast receiving apparatus according to the embodiment of the invention.
Fig. 7 illustrates an example list display screen of programs selected through the preview program selection screen of Fig. 6.
Fig. 8 is a flowchart illustrating an example program reproducing method according to the embodiment of the invention.

### DETAILED DESCRIPTION OF THE EMBODIMENTS

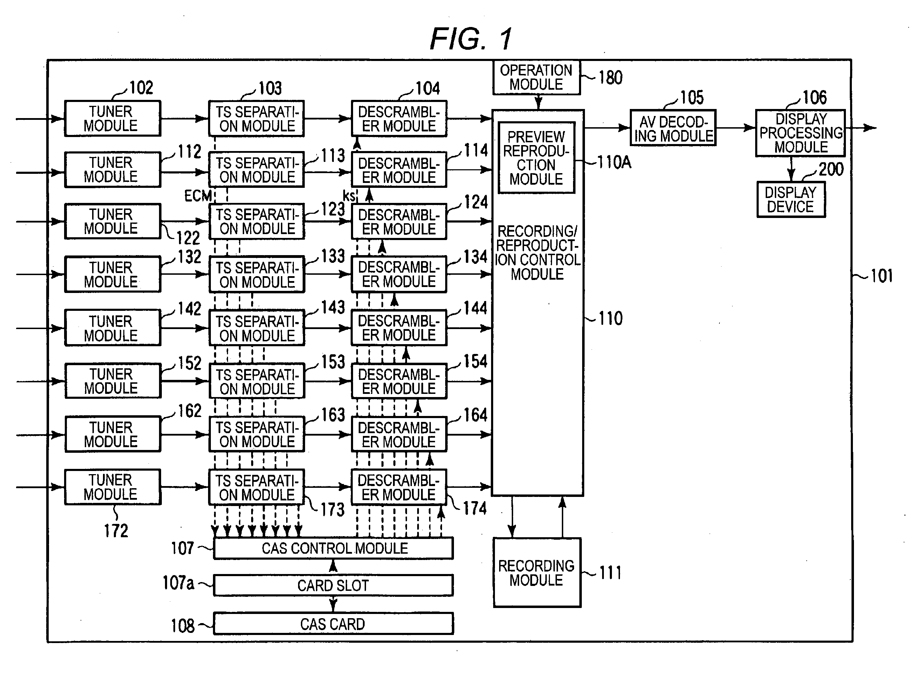

A broadcast receiving apparatus according to an embodiment of the present invention will be hereinafter described with reference to the drawings. Fig. 1 illustrates a configuration of a digital broadcast receiving apparatus 101 (recording control device) according to an embodiment of the invention.

The digital broadcast receiving apparatus 101 is a digital TV receiver incorporating a program recording control device or a broadcast receiving apparatus incorporating a program recording control device. The embodiment is directed to a case where eight or more tuner modules (tuner modules for receiving terrestrial digital broadcast and BS/CS digital broadcast) are provided as receiver for receiving scrambled digital broadcast signals.

The digital broadcast receiving apparatus 101 is equipped with tuner modules 102-107 as plural receiver capable of receiving signals selectively, recording/reproduction control module for performing given signal processing on the signals received by the tuner modules 102-107, a recording module 111 as a storage device for recording signals as processed by the recording/reproduction control module, and an AV decoding module 105 and a display processing module 106 for processing signals as processed by the recording/reproduction control module so that they become displayable. The recording/reproduction control module is equipped with TS separation modules 103-173, descrambler modules 104-174, and a recording/reproduction control module 110.

The recording/reproduction control module 110 is equipped with a preview reproduction module 110A for controlling the AV decoding module 105 and the display processing module 106 so as to simultaneously display plural program data recorded in the recording module 111.

A broadcast program signal received by the first tuner module 102 is sent to the TS separation module 103, which separates program information (entitlement control message: ECM) from the broadcast program signal. The separated ECM is transferred to a CAS module (a CAS card which takes the form of an IC card; hereinafter referred to as a CAS card where appropriate) 108 which is inserted in a card slot (card interface) 107a via a CAS control module 107. The CAS (conditional access system) 108 card acquires a scramble key Ks by decoding an encoded ECM using a work key Kw stored therein.

At the same time, the CAS card 108 acquires attribute information relating the program from the ECM and determines whether to perform descrambling by comparing it with contract information stored therein. In making this determination, control is performed according to a charging method that is indicated by the attribute information of the program. The scramble key Ks and the work key Kw depend on the broadcasting company but are common to all receivers.

A broadcast program signal received by the second tuner module 112 is sent to the TS separation module 113, which separates ECM from the broadcast program signal. The separated ECM is transferred to the CAS card 108 via the CAS control module 107.

Likewise, a broadcast program signal received by the third tuner module 122 is sent to the TS separation module 123, which separates ECM from the broadcast program signal. The separated ECM is transferred to the CAS card 108 via the CAS control module 107.

A broadcast program signal received by the fourth tuner module 132 is sent to the TS separation module 133, which separates ECM from the broadcast program signal. The separated ECM is transferred to the CAS card 108 via the CAS control module 107.

A broadcast program signal received by the fifth tuner module 142 is sent to the TS separation module 143, which separates ECM from the broadcast program signal. The separated ECM is transferred to the CAS card 108 via the CAS control module 107.

A broadcast program signal received by the sixth tuner module 152 is sent to the TS separation module 153, which separates ECM from the broadcast program signal. The separated ECM is transferred to the CAS card 108 via the CAS control module 107.

A broadcast program signal received by the seventh tuner module 162 is sent to the TS separation module 163, which separates ECM from the broadcast program signal. The separated ECM is transferred to the CAS card 108 via the CAS control module 107.

A broadcast program signal received by the eighth tuner module 172 is sent to the TS separation module 173, which separates ECM from the broadcast program signal. The separated ECM is transferred to the CAS card 108 via the CAS control module 107.

In ordinary processing, the CAS control module 107 sends ECMs that are sent from the respective TS separation modules 103-173 to the CAS card 108 in order of arrival, and sets scramble keys Ks returned from the CAS card 108 in the respective descrambler modules 104-174.

The descrambler modules 104-174 descrambler coded contents using the thus-set scramble keys Ks and send descrambled broadcast program signals to the recording/reproduction control module 110. The recording/reproduction control module 110 records the broadcast program signals in the recording module 111 or output them to the AV decoding module 105.

The recording module 111, which is an HDD, a disc drive, or an SD (registered trademark) card reader/writer, records the broadcast program signals sent from the recording/reproduction control module 110. The recording module 111 is not indispensable for the digital broadcast receiving apparatus 101 and may be a device that is connected to the digital broadcast receiving apparatus 101.

In the latter case, the output of the recording/reproduction control module 110 is transferred to the recording module 111 via an IEEE 1394 interface, an HDMI (high-definition multimedia interface) interface, or the like. The AV decoding module 105 decodes the broadcast program signals into AV information (video and audio).

The AV information, that is, the decoded output (AV output), is output to a display device 200 or an external monitor (not shown) via the display processing module 106. The display processing module 106 has a GUI (graphical user interface) function for displaying information to the user by OSD (on-screen display) or the like. The GUI function enables display of an entire recorded program list display screen (described later) on the display device 200 or the external monitor.

An operation input module 180 receives various operation commands input by the user. For example, the operation input module 180 receives an automatic recording setting, a recording time setting, and a recording time slot setting input by the user.

The operation input module 180 may be a module corresponding to an operating panel that is attached to the digital broadcast receiving apparatus 101 or may be a remote controller (not shown) that is provided separately from the digital broadcast receiving apparatus 101.

Next, a description will be made of setting of a recording period in automatic recording. As described above, the digital broadcast receiving apparatus 101 is equipped with the eight or more tuner modules 102-172. That is, the digital broadcast receiving apparatus 101 can record programs on at least eight channels simultaneously.

For example, if the user sets automatic recording for channels 1-8 and sets an 8-hour recording period for the channels 1-8 through the operation input module 180, the recording/reproducing control module 110 records 8-hour program data on the channels 1-8 in the recording module 111. If the user makes a whole recording setting through the operation input module 180, 1-day program data on the channels 1-8 are recorded in the recording module 111.

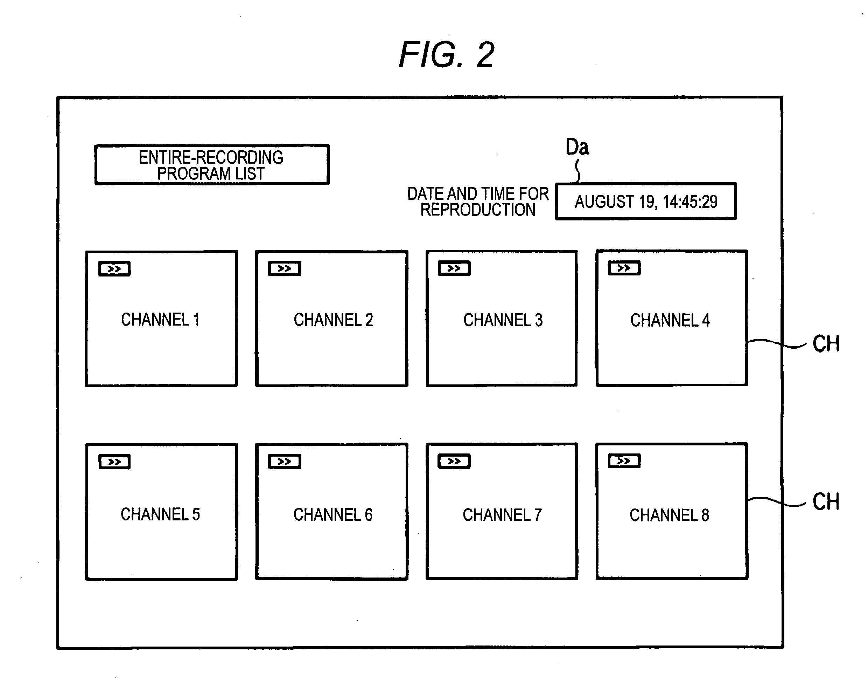

In the broadcast receiving apparatus according to the embodiment, if, for example, preview reproduction is selected through a menu screen or a preview reproduction button on the remote controller is operated, the preview reproduction module 110A of the recording/reproducing control module 110 displays plural programs were recorded simultaneously in the above-described manner like an entire recorded program list display screen shown in Fig. 2.

That is, the preview reproduction module 110A is equipped with a reproduction module for simultaneously preview-displaying plural program data that were recorded at an identical time among the program data recorded in the recording module 111.

As shown in Fig. 2, the entire recorded program list display screen is provided with display windows CH for the eight respective channels and recorded programs are displayed simultaneously in the respective display windows CH. The entire recorded program list display screen is also provided with a date/time input box Da where to display a date and time when programs that the user wants to preview-display were recorded. A date and time when preview-displayed programs were recorded are displayed in the reproduction date/time box Da. By specifying a date and time in the reproduction date/time box Da through the remote controller or the like, the user can display a list of programs that were recorded simultaneously at the specified date and time.

The preview reproduction module 110A is equipped with a preview program operation module (not shown) for fast forwarding, rewinding, skipping, or pausing the plural preview-displayed program data according to an operation signal sent from the remote controller or the like.

If the user operates the remote controller, for example, while the entire recorded program list display screen is being displayed, the preview reproduction module 110A performs various video controls such as fast forwarding, rewinding, pausing, and skipping on the plural displayed programs. This allows the user to quickly recognize the contents of the recorded programs.

The preview reproduction module 110A may further be equipped with a program table display module (not shown) for displaying an electronic program guide and a module for showing a position, on the electronic program guide, of a time when plural preview-displayed programs were recorded.

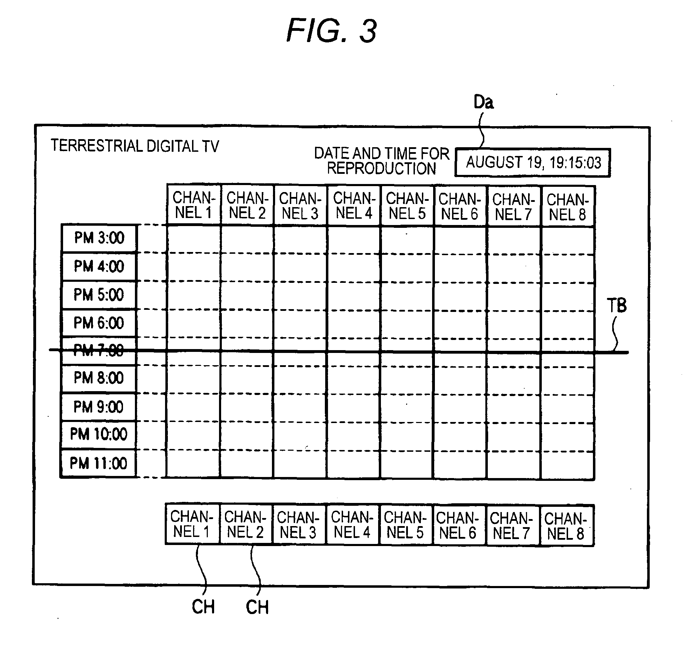

In this case, for example, a program table and display windows CH are displayed together as shown in Fig. 3 in an entire recorded program list display screen. In the example of Fig. 3, the program table is displayed in such a manner the time axis is set in the vertical direction of the display screen and program spaces of plural channels are arranged for each time slot in the horizontal direction of the display screen.

The display windows CH of the respective channels are provided in a neighboring area of the program table. A time bar TB is displayed in the program table according to a time when the programs being displayed in the display windows CH were recorded. Furthermore, a reproduction date/time box Da for displaying a date and time when programs the user wants to preview-display were recorded is provided in another neighboring area of the program table. A recording date and time of the programs being displayed in the display windows CH are displayed in the reproduction date/time box Da.

Also in this case, as in the example of Fig. 2, the user can input operations such as fast forwarding, rewinding, pausing, and skipping to be performed on the plural displayed programs by operating the remote controller, for example. The user can adjust the recording date and time of programs to be displayed in the display windows CH by adjusting the position of the time bar TB by operating the cursor key on the remote controller.

The preview reproduction module 110A may be equipped with a reproduction module for simultaneously preview-displaying program data on a given channel that were recorded in a given period among the programs recorded in the recording module 111.

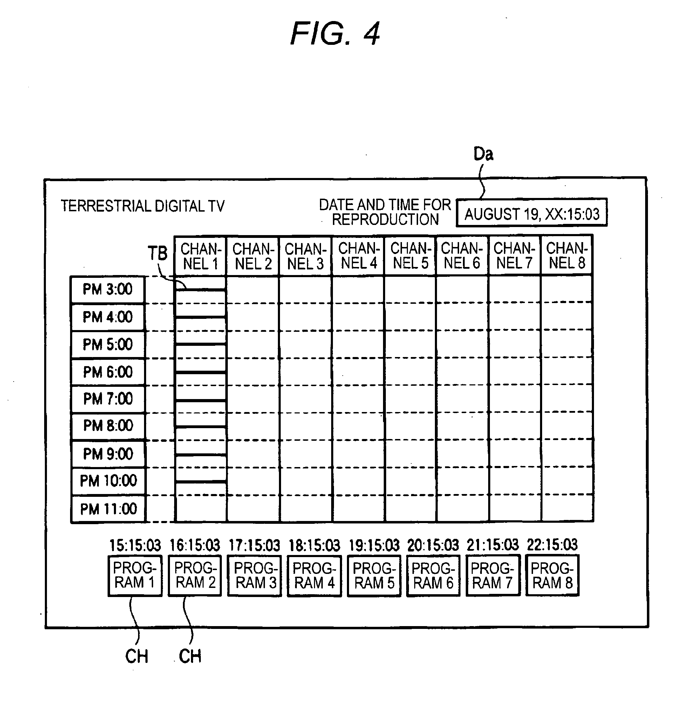

Fig. 4 shows another example of the entire recorded program list display screen in which programs on a particular channel that were recorded in respective time slots are displayed. In the example of Fig. 4, a program table is displayed and display windows CH are provided in the neighborhood of the program table in the same manner as in the example of Fig. 3.

Programs on a channel selected by the user that were recorded in respective time slots are displayed in the respective display windows CH. The user can select at least one channel by operating the cursor buttons of the remote controller, for example.

In the entire recorded program list display screen of Fig. 4, one channel, for example, is selected and eight display windows CH are arranged. The recording time slots of programs displayed in the respective display windows CH are one hour in length, for example. Time bars TB are displayed in the program table according to recording times of the programs being displayed in the display windows CH.

As in the example of Fig. 2, the user can input various operations such as fast forwarding, rewinding, pausing, and skipping to be performed on the plural displayed programs by operating the remote controller, for example. The user can adjust the recording times of programs to be displayed in the display windows CH by adjusting the positions of the time bars TB by operating the cursor key on the remote controller.

Although in the example of Fig. 4 the recorded programs on the one channel are displayed, the user may display recorded programs on plural channels in the display windows CH by selecting the plural channels.

Where program data on two channels are preview-displayed, an entire recorded program list display screen is displayed in, for example, the following manner. Plural display windows for displaying program data on a first channel that were recorded in a given period and program data on a second channel that were recorded in the given period are arranged, and a date and times when the programs were recorded are displayed near the display windows, respectively.

In this case, it is possible to allow the user to recognize the channels of programs being displayed in the display windows by arranging, at different positions, the display windows for displaying program data on the first channel and the display windows for displaying program data on the second channel, displaying a channel in the vicinity of each display window together with a date and time, or changing the colors of the frames of the display windows.

Although in the above example the recording time slots of programs displayed in the respective display windows CH are one hour in length, for example, the length of the recording time slots may be made changeable by the user. Shortening the recording time slots makes it possible to quickly recognize a program that was recorded in a particular time slot. Elongating the time slots makes it possible to recognize programs that were recorded throughout a day, for example.

Where a channel of viewing of the user is determined, displaying recorded programs on a particular channel in the above-described manner allows the user to recognize a favorite recorded program more quickly.

The recording/reproduction control module 110 may further be equipped with a program selecting module for displaying a preview program selection screen which includes a list of titles of programs recorded in the recording module 111 and which allows the user to select programs to be preview-displayed. In this case, the preview reproduction module 110A is equipped with a reproduction module for preview-displaying the programs selected by the user.

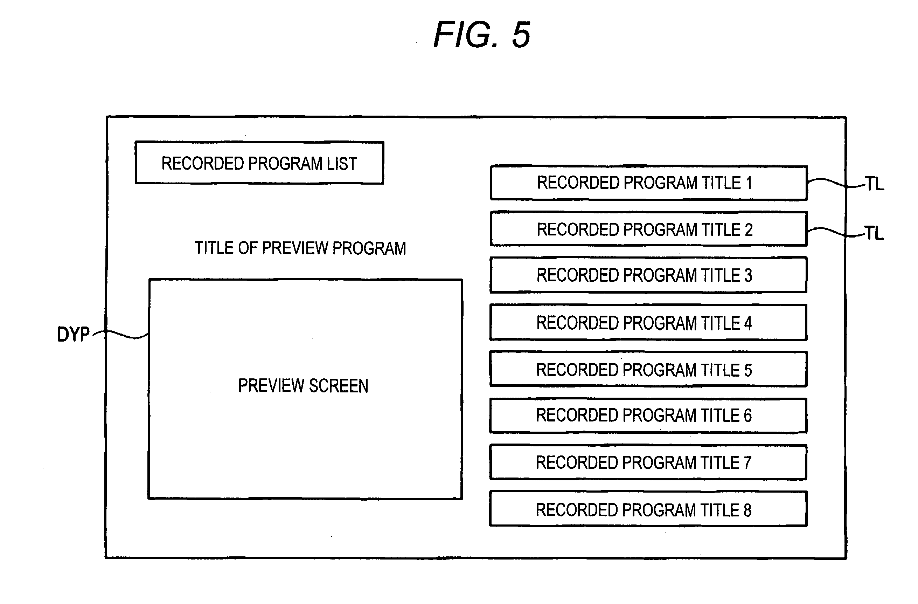

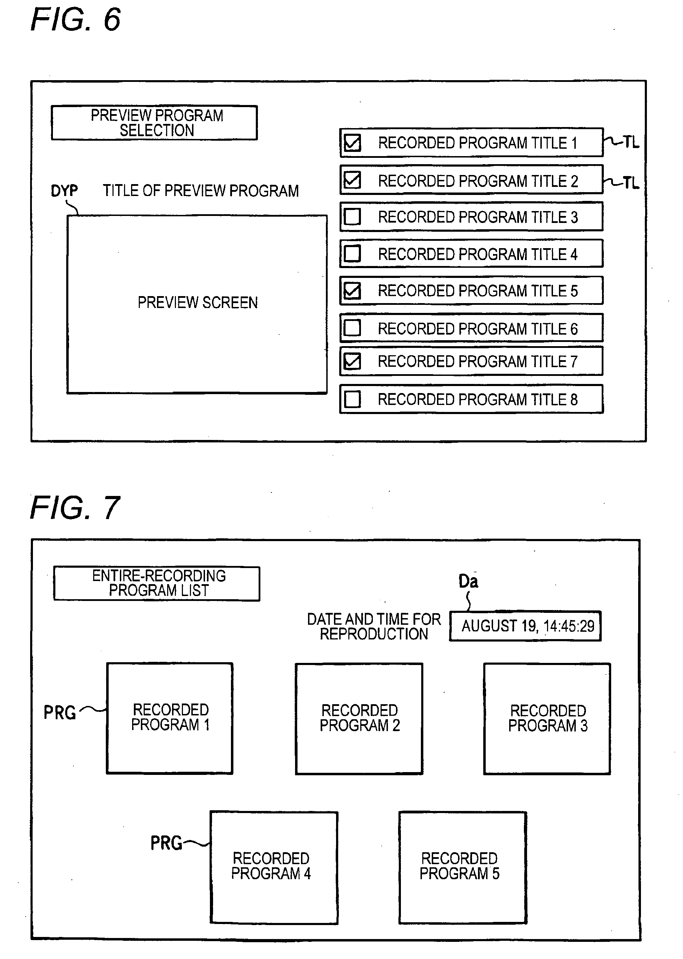

For example, the recording/reproduction control module 110 is equipped with a program selecting module for displaying a preview program selection screen as shown in Fig. 6. If display of a recorded program list as shown in Fig. 5 is selected and "entire-recording reproduction" is selected by the user's operating the remote controller, for example, a preview program selection screen as shown in Fig. 6 is displayed. For example, titles of program data that were recorded at an identical time are displayed in the preview program selection screen of Fig. 6 in the form of a recorded program list.

The user can select one of the plural recorded program titles TL in the preview program selection screen of Fig. 6 by operating the cursor buttons of the remote controller, for example.

In the example of Fig. 6, a preview screen is provided adjacent to the plural recorded program titles TL. If, for example, the cursor on the screen is placed on one program title TL, the program data of that program title TL is preview-reproduced and displayed in the preview screen. The user roughly checks the content of each program displayed in the preview screen and selects programs to be preview-displayed by checking, for example, check boxes that are provided in the vicinities of those recorded program titles TL.

For example, if the user selects programs to be preview-displayed by pressing the enter button of the remote controller, for example, the screen is switched to an entire recorded program list display screen as shown in Fig. 7. The entire recorded program list display screen is provided with display windows PRG in the same number as the number of programs selected by the user.

In the example of Fig. 6, eight programs can be selected at the maximum. The recording/reproduction control module 110 changes, as appropriate, the size, positions, etc. of the preview display windows PRG in the entire recorded program list display screen according to the number of programs that have been selected by the user through the preview program selection screen.

A modification is possible in which titles TL of programs on a given channel that were recorded in a given period (e.g., on a given day) are displayed in the preview program selection screen and the user is allowed to select some of those recorded program titles TL.

Also in this case, as in the example of Fig. 2, the user can cause various operations such as fast forwarding, rewinding, pausing, and skipping to be performed on the plural preview-displayed programs by operating the remote controller, for example.

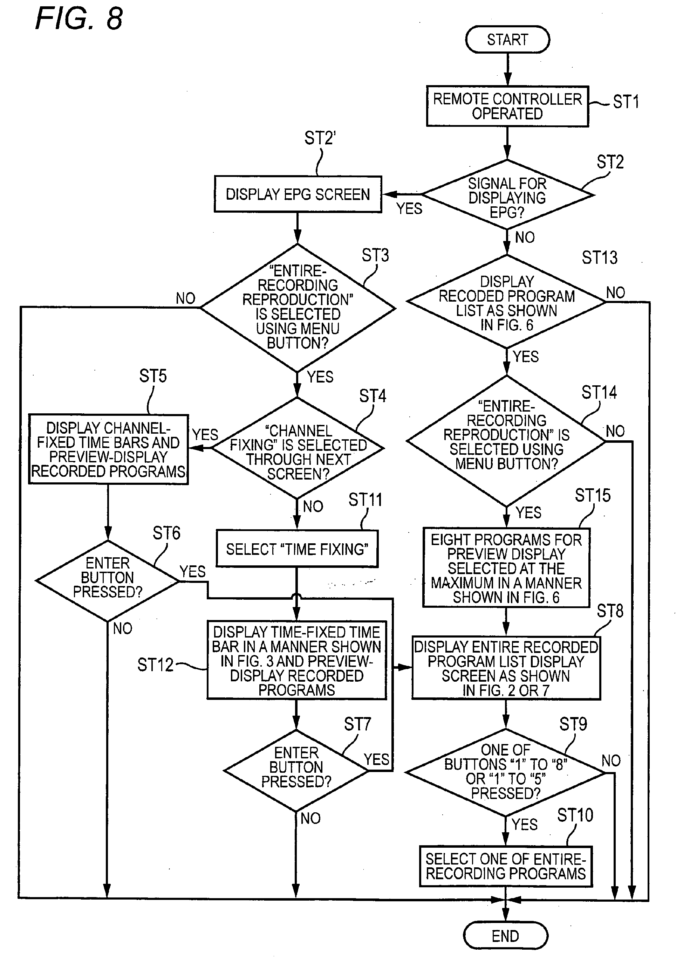

Next, a method for reproducing programs according to the embodiment of the invention will be described with reference to Fig. 8. First, if an operation signal is received through the operation input module 180 when the user operates the remote controller at step ST1, the recording/reproduction control module 110 determines at step ST2 whether it is a signal for displaying an electronic program guide (EPG).

If the operation signal is a signal for displaying an electronic program guide, at step ST2' the recording/reproduction control module 110 controls the AV decoding module 105 and the display processing module 106 to display, on the display device 200 or the external monitor, an electronic program guide that is acquired over a network (not shown), for example.

If the user selects "entire-recording reproduction" using a menu button at step ST3 and selects "channel fixing" at step ST4, at step ST5 the recording/reproduction control module 110 displays an electronic program guide as in the entire recorded program list display screen of Fig. 4 and preview-displays plural programs on a given channel that were recorded in a given period.

In doing so, the user can switch between items arranged in the right-left direction (i.e., switch the preview subject channel) or items arranged in the top-bottom direction (i.e., switch the preview times) by operating the up, down, right, and left cursor buttons of the remote controller, for example. Furthermore, the user can specify the length of preview time slots as 30 minutes, 1 hour, 2 hours, or the like.

If the user presses the enter button in this state at step ST6, at step ST8 the plural programs that have been preview-displayed in the display windows CH are displayed large on the screen. At this time, the electronic program guide is deleted from the screen or only its preview subject channel portion is displayed smaller than the screen area where the plural display windows CH are arranged.

If at step ST9 the user selects one program by pressing one of the buttons "1" to "5" of the remote controller, for example, one of the entire-recording programs is selected at step ST10 and starts to be reproduced.

If the user does not fix the channel (ST4: no), "time fixing" is selected at step ST11. If "time fixing" is selected, an electronic program guide is displayed as in, for example, the entire recorded program list display screen of Fig. 3 and programs that were recorded at an identical time are preview-displayed simultaneously.

If the user presses the enter button in this state at step ST7, at step ST8 the plural programs that have been preview-displayed in the display windows CH are displayed large on the screen.

If at step ST9 the user selects one program by pressing one of the buttons "1" to "8" of the remote controller, for example, one of the entire-recording programs is selected at step ST10 and starts to be reproduced.

On the other hand, if an electronic program guide should not be displayed (ST2: no) and if the user selects display of, for example, a recorded program list as shown in Fig. 5 at step ST13 and selects "entire-recording reproduction" at step ST14, titles TL of program data that were recorded at an identical time are displayed as a recorded program list in, for example, a preview program selection screen as shown in Fig. 6 to establish a state that plural programs to be preview-displayed can be selected from the recorded program titles TL being displayed as the recorded program list.

In the example of Fig. 6, eight programs can be selected at the maximum. The recording/reproduction control module 110 changes, as appropriate, the size, positions, etc. of preview display windows PRG to be displayed in an entire recorded program list display screen according to the number of programs that has been selected by the user through the preview program selection screen.

If the user selects programs to be preview-displayed at step ST15, at step ST8 the selected programs are preview-displayed in, for example, an entire recorded program list display screen as shown in Fig. 7. If at step ST9 the user selects one program by pressing one of the buttons "1" to "5" of the remote controller, for example, one of the entire-recording programs is selected at step ST10 and starts to be reproduced.

In the state that the recorded programs are being preview-displayed, the user can fast-forward, rewind, skip, or pause all the preview-displayed programs by operating the fast forward button, rewind button, one-touch skip button, or pause button of the remote controller. This allows the user to recognize the content of each preview-displayed program quickly and effectively.

The user can preview-display programs of a desired date and time by directly specifying, through the remote controller, a date and time to be placed in the reproduction date/time box Da which is provided in the entire recorded program list display screen.

Furthermore, while an electronic program guide is being displayed, the user can change the position of the time bar TB by operating the up or down button of the remote controller. All programs that ware recorded at a time indicated by the time bar TB are preview-displayed in the display windows CH which are located in the neighborhood of the electronic program guide.

As described above, the embodiment can provide a broadcast receiving apparatus and a program reproducing method which increase the ease of use of the user by preview-displaying plural recorded programs simultaneously. The above embodiment is particularly effective when applied to a broadcast receiving apparatus capable of recording all programs that are broadcast in a given period (whole recording) and a related program reproducing method because the user can easily select a program he or she wants to view from many recorded programs.

The user may view a drama again from the start because the user was attracted by his or her favorite player who appeared instantaneously when plural preview-displayed programs were fast forwarded, or may view an old animation or movie again from the start with nostalgia when it was preview-displayed. Viewing promotion effects such as finding of a new program and re-viewing of an old program are thus expected.

Although it is described above that the broadcast receiving apparatus of Fig. 1 is equipped with the display device 200 as the display unit, the display unit may be an external monitor device which is connected to the broadcast receiving apparatus so as to be supplied with a signal that is output from the display processing module 106.

Although the embodiments according to the present invention have been described above, the present invention is not limited to the above-mentioned embodiments but can be variously modified.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A broadcast receiving apparatus comprising:
a plurality of receiver modules configured to selectively receive broadcast signals;
a control module configured to perform signal processing on the broadcast signals received by the receiver modules and output processed signals;
a recording module configured to record the processed signals as a plurality of program data; and
a display processing module configured to process the program data stored by the recording module to generate displayable data to be displayed on a display device,
wherein the control module comprises a preview reproduction module configured to control the display processing module so that two or more of the program data are processed to be previewed simultaneously.

2. The apparatus of Claim 1, wherein the preview reproduction module comprises a preview displaying module configured to control the display processing module so that two or more of the program data being recorded at a same time slot are processed to be previewed simultaneously.

3. The apparatus of Claim 2, wherein the preview reproduction module controls the display processing module so that a date/time box is displayed, the date/time box being an area where a date and time when the program data are recorded is displayed.

4. The apparatus of any one of Claims 1-3, wherein the preview reproduction module controls the display processing module to simultaneously preview two or more of the program data recorded for a given channel for a given time period.

5. The apparatus of any one of Claims 1-4, wherein the preview reproduction module controls the display processing module so that a program table, a plurality of preview display windows arranged near the program table, and a position indicator indicating a time position of the program data being previewed in the preview display windows.

6. The apparatus of any one of Claims 1-4, wherein the control module comprises a program selecting module configured to operate for displaying a preview program selection screen including a list of titles of programs corresponding to the program data recorded by the recording module, the preview program selection screen allowing a user to select programs to be previewed, and
wherein the preview reproduction module controls the display processing module so that the programs selected by the user are previewed.

7. The apparatus of any one of Claims 1-6 further comprising a user interface configured to supply the control module with an operation signal corresponding to an operation input by a user,
wherein the preview reproduction module comprises a preview program operating module configured to control a reproduction of the program data being previewed according to the operation signal.

8. The apparatus of any one of Claims 1-7, further comprising the display device configured to be supplied with a displayable data output from the display processing module.

9. A method for reproducing a program, the method comprising:
receiving a plurality of broadcast signals selectively;
performing signal processing on the broadcast signals to output processed signals;
recording the processed signals as a plurality of program data; and
processing the stored program data to generate displayable data to be displayed on a display device,
wherein the stored program data are processed so that two or more of the program data are processed to be previewed simultaneously.
